# EUROPEAN PATENT APPLICATION

(11) **EP 2 879 107 A1**
(43) Date of publication of application: **03.06.2015**
(21) Application number: 13195310.1
(22) Date of filing: 02.12.2013
(51) Int. Cl.: G08G 1/0967, G08G 1/00, H04W 4/04, H04W 4/06, H04W 4/02, H04W 4/18, H04W 4/20

(54) **Navigation and communication system for a means of transport**

(71) Applicant: Continental Automotive GmbH, 30165 Hannover (DE)
(72) Inventor: Risch, Markus, 93053 Regensburg (DE); Frankovic, Ivan, 92637 Weiden i. d. OPf. (DE); Körner, René Alexander, 93047 Regensburg (DE); Köhler, Thorsten, 93180 Deuerling (DE); Wein, Paul, 93053 Regensburg (DE); Ertel, Sven, 92237 Sulzbach-Rosenberg (DE); Heimhuber, Reinhard, 93053 Regensburg (DE)

(57) **Abstract**

According to an aspect of the present invention, a navigation and communication system is provided, which allows a first user to input information which is linked to a user-defined location. Once a second user's device enters an area around the location, execution of a program element is triggered on the second user's device, which then provides the information input by the first user to the second user. Thus, traffic and road information can be provided from a first user to a second user at the right time and the right location.

## Description

The invention relates to the field of automotive applications. In particular, the invention relates to a navigation and communication system for a means of transport, a method for car-to-infrastructure communication and navigation, a program element and a computer-readable medium.

It is known to use satellite navigation systems, such as GPS, Galileo, GLONASS, Compass, or IRNSS, for providing position and direction information to the driver of a car or any other means of transport.

The navigation system may increase the safety to traffic since they are capable of providing information about points of interest, such as gas stations, or traffic information. The information about the points of interest may be stored on a storage medium of the navigation system and the traffic information may be transmitted to the navigation system from an external broadcasting station. The driver of the car may have select which kind of information he would like to be displayed.

It is an object of the invention to provide for an increased safety to traffic.

This object is solved by the features of the independent claims. Developments of the invention are stated in the dependent claims and the following description.

According to a first aspect of the invention, a navigation and communication system for a means of transport is provided. The system comprises a control unit, a communication unit and a positioning unit.

The control unit comprises a user interface for inputting individual data which comprises user-related information and information about a location the user-related information relates to. The control unit is designed to generate a data set which comprises the data which has been input via the user interface.

It should be noted that the system may comprise several control units, one being positioned in the means of transport and the others in other means of transport or in stationary or mobile devices, such as mobile phones or handheld computers.

The communication unit, which is communicatively connected to the control unit, is designed to transmit the data set to an external server.

The positioning unit, which is communicatively coupled to the control unit, is designed to determine a position of the means of transport.

The control unit is designed to determine when the position of the means of transport, which has been determined by the positioning unit, is within a predefined area around the location, and to output the user-related information as soon as the control unit has determined that the position of the means of transport is within the area.

In other words, the navigation and communication system may allow a user to input individual, user-related information and the coordinates of a specific location which is linked to the user-related information into the interface of his control unit, e.g., his mobile phone. The mobile phone then transmits corresponding data (here and in the following also called "data set") to the external server. This data set can then be transmitted from the external server to another control unit, which is, for example, installed inside a car or other means of transport, i.e., a control unit of a second user.

Once the means of transport enters the area around the location specified by the first user, the user-related information is output on a display or some other interface, such that the second user (driver of the car) gets the information.

According to an exemplary embodiment of the invention, a first user can define what kind of information is to be presented to a second user (or to a group of second users), if, and only if the second user enters an area defined by the first user.

According to an exemplary embodiment of the invention the user can trigger his device to output the user related information even irrespective of his current position.

The user-related information may comprise traffic information, parking information or navigational information. The information can be transmitted from the server to the recipients (second users) automatically, without the server knowing where each second user is located. The position determination is performed on board the means of transport, without server involvement. No tracking of the second users is necessary on the server.

According to an exemplary embodiment of the invention, the server pushes the data set, i.e., transmits the data set to the control unit of the second user automatically.

The data set which is received by the server may be executed by an executable computer program ("App"). The executable programs may be offered on a virtual market place which can be accessed by users for downloading.

Thus, personalized navigation may be provided. Alternatively or additionally, the data set may comprise information about the route of an emergency car, such as a fire brigade, an ambulance or a police car, traffic warning, ice warning, fog warning. According to an exemplary embodiment, the data set comprises a distance information which defines the area around the location. In other words, the first user can determine the size of the area around the location. It may also be provided, that the size around the location depends on the velocity of the means of transport. For example, if the means of transport moves relatively fast, the area around the location may be bigger, whereas, if the means of transport moves relatively slow, the area around the location may be smaller.

Furthermore, the system may be adapted to activate the executable program, i.e., to output the user-related information depending on the current traffic situation in the vicinity of the means of transport.

In this case, the user-related information may comprise information with regard to alternative routes.

It should be noted that the first user may define which group of second users is allowed to access the data set, i.e., to download the data set from the server.

According to an exemplary embodiment of the invention, the data set comprises a list of recipients ("second users") which are to receive the data set from the server.

According to another exemplary embodiment of the invention, the control unit is designed to receive instructions from the first user, wherein the instructions define at least one of the content of the user-related information, the location the user-related information relates to, a distance information which defines the area around the location, and the list of recipients.

According to another exemplary embodiment of the invention, the control unit is designed to change the distance information which defines the area around the location depending on a speed of the means of transport.

It should be noted in this context that the means of transport may be a car, a truck, a train, a bus, a ship, an aircraft or airplane, or a bike, an automated transfer vehicle, a quad or the device may be carried by a pedestrian.

According to another exemplary embodiment of the invention, the control unit is designed to output the user-related information when it is determined that the position of the means of transport is within the area and when a predefined traffic situation is determined in the vicinity of the means of transport.

According to another exemplary embodiment of the invention, the user-related information comprises control information for controlling the means of transport.

Such control unit may be, for example, velocity information defining the maximum velocity the means of transport should have in view of the present road/traffic situation.

According to another aspect of the invention, a means of transport is provided which comprises the above and below described navigation and communication system.

According to another aspect of the invention, a method for car-to-infrastructure communication and navigation is provided, in which data is input into a user device by a first user, the data comprising user-related information and information about a location the user-related information relates to. After that, a data set is generated by the user device which comprises the data. The data set is then transmitted from the user device to an external server. The server may be adapted to generate an executable computer program from the data set which can be transmitted from the external server to a navigation and communication device of a car. After transmission of the executable program or the data set by the server, the position of the car is determined (by the navigation and communication device of the car) and it is also determined, when the position of the car is within a predefined area around the location, after which the user-related information is output on a user interface of the car as soon as it is determined that the position of the car is within the area. "Outputting the user-related information" may involve execution of the computer executable program transmitted from the server to the navigation and communication device of the car.

According to another aspect of the invention, a program element is provided, which, when being executed on one or several processors of a navigation and communication system, instructs the system to perform the above and below described method steps.

According to another aspect of the invention, a computer-readable medium is provided, on which the above described program element is stored.

A computer-readable medium may be a floppy disk, a hard disk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code.

These and other aspects of the present invention will become apparent from and elucidated with reference to the embodiments described hereinafter.

Exemplary embodiments of the present invention will now be described in the following, with reference to the following drawings.
- Fig. 1: shows a car with a control unit according to an exemplary embodiment of the present invention.
- Fig. 2: shows a navigation and communication system according to an exemplary embodiment of the present invention.
- Fig. 3: shows a flow-chart of a method according to an exemplary embodiment of the present invention.

The illustration in the drawings is schematically. In different drawings, similar or identical elements are provided with the same reference numerals.

The following detailed description is merely exemplary in nature and is not intended to limit application and uses. Furthermore, there is no intention to be bound by any theory presented in the preceding background or summary or the following detailed description.

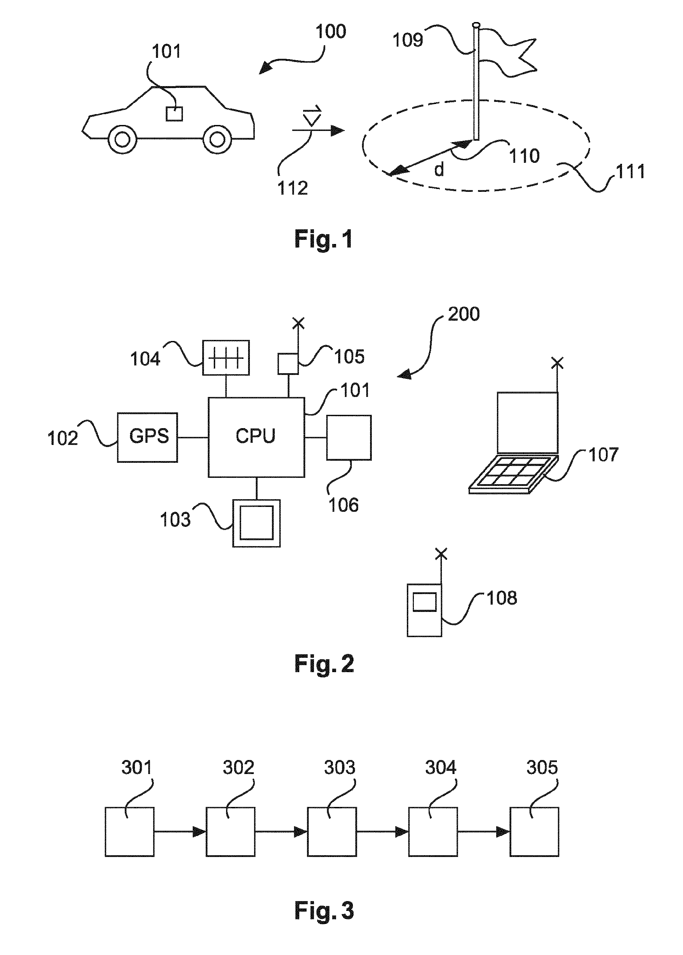

Fig. 1 shows a car 100 which comprises a control unit 101 and, of course, other components of the navigation and communication system according to aspects of the present invention. The car moves with a certain speed in direction of arrow 112 towards the location 109.

The location 109 may be specified by a first user (which is not necessarily the driver of the car 100). The first user may also specify the distance 110 which defines the size of the area 111 around the location 109.

The first user can provide this information and further, user-related information to a central server which then transmits a corresponding data set, for example in form of a computer-executable program element, to the control unit 101. As soon as the car 100 enters the area 111, the program element is executed, resulting in a provision of the user-related information to the driver of the car 100.

The user-related information which is provided to the server by the first user may comprise one or more of the following: text, images, speech, other audio signals, video signals, computer games, dynamic content (for example instructions to the control unit of the second user only to access the information if the car is in a traffic jam), links to other data sets or program elements which contain user-related information and position information, geographical height information, lifetime of the program element, or information about time intervals during which the data set may be accessed by the control unit of the second user, list of recipients (i.e., group of second users), price of the data set, odour, taste, colour, temperature, air pressure information, links to other users.

The data set may also comprise instructions to turn on a four wheel drive or to change the operating mode of the car, if the means of transport enters the area. It may also comprise information to the second user asking him to perform a certain manoeuvre or to be alert due to a specific traffic situation.

The server may also be programmed to transmit not only one data set to the control unit of the second user, but a plurality of linked data sets or a plurality of linked executable program elements, which may also be called a "bundle" of data sets or executable program elements.

Fig. 2 shows a navigation and communication system 200 according to an exemplary embodiment of the present invention. The system 200 comprises a sub-system installed in a means of transport. The sub-system comprises the control unit 101, which is communicatively coupled to the communication unit 105, a user interface 104 for inputting information, a user interface 103 for outputting information (for example a monitor or display and/or an audio system), a storage medium (computer-readable medium) 106 and a GPS navigation system 102.

The navigation and communication system 200 also comprises an external server 107 and one or more external, mobile or stationary user devices 108, which each may comprise a corresponding control unit, such as control unit 101.

The server 107 may be adapted to automatically generate bundles of data sets or executable programs. It should be noted, that in the context of the present invention, the terms "executable program" and "executable program element" refers to executable programs which comprise the information input by the first user into his control unit, which information is then transmitted to the server 107. Such an executable program may have the form of an "App", i.e., a small program which can be purchased via a virtual market place and installed on a second user's computer, for example the control unit 101 of the onboard navigation and communication device.

The executable programs or data sets, which may be bundled, i.e., linked with each other, may be executed in sequence or at the same time, depending on the type of links between the program elements and/or the data they contain.

Furthermore, the server may be programmed to provide an automated update function of the programs downloaded by the second users from the server.

The server may be programmed to link executable programs from different users, which have been uploaded onto the server, if, for example, their contents are geographically and/or thematically related. Examples for such related contents are navigational contents or information about points of interest close to the location defined by the first user who uploaded one of the executable programs onto the server.

Thus, a geosocial network may be provided, which links the first and second users and which allows its users to send and receive location-based messages and information. The messages can be sent to a second user or a group of second users via the server and comprises location coordinates (latitude and longitude), a trigger/receiving radius and the actual message. The message may contain text or additional multimedia files like photos and audio files. The receiver (second user) of the message can be anybody who has signed up with this service and is on the friend's list of the first user who uploaded the message.

If a receiver of such a message enters the receiving radius which defines the area described above with his car or smart phone with a corresponding localization service activated, an information message pops up on his smart phone display. Now he can read the content of the message.

The first user may also create chains of messages, which are called bundles. The chain of messages is created via a website. Examples for these bundles may be sightseeing tours, sports and paper chase tours, as well as traffic and road information. The bundles may be sold on a virtual market place.

Fig. 3 shows a flow-chart of a method according to an exemplary embodiment. In step 301, a first user inputs information relating to a certain location and defines an area around the location. In step 302, this information is transmitted via the Internet or another communication path to a backend server, which verifies recipient settings in step 303 and transmits a data set or an executable program (App) which contains the information input by the first user via communication link to a recipient. The recipient may be the first user who input the information and now has an executable program or some other user, which has been indicated by the first user.

In step 304, the navigation and communication device of the second user realizes that the user enters the area defined by the first user. Due to this, the executable program is executed on a control unit of the second user in step 305, such that the user information input by the first user and his device can now be displayed on the second user's device.

All users who want to use the above-described system may need to register on the server. It may be provided that each user can only make the server send data sets and / or executable programs to his friends from his friend list.

The user may create messages with different receiving radii and relating to different positions. The data sets and / or executable programs are then stored on one or more servers and will be immediately transferred from the server to the communication device of the second user, where they are stored. After that, the communication link between the server and the second user's device can be terminated.

The second user's device then compares the coordinates of the area around the location and the current position of the user and triggers execution of the program when these coordinates are the same.

The first user, i.e., the creator of the program element never gets a message that the receiver went through one of his areas. Thus, tracking of people may be efficiently prevented.

Examples of information which can be generated by the first users are: speed-trap warning information, private parking space information, traffic information, truck-parking management information, location-based messages for fleets, navigational information, personalized navigation information, restaurant recommendations, bus station advertising, location-based advertising, highway rest area information, parking garages information, and maintenance and repair information.

It should be noted that the term "comprising" does not rule out a plurality. Let it further be noted that features described with reference to one of the above exemplary embodiments can also be used in combination with other features of other exemplary embodiments described above. Moreover, while at least one exemplary embodiment has been presented in the foregoing summary and detailed description, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing an exemplary embodiment, it being understood that various changes may be made in the function and arrangement of elements described in an exemplary embodiment without departing from the scope as set forth in the appended claims and their legal equivalents.

## Claims

1. Navigation and communication system (200) for communicating with a means of transport (100) and providing navigation information, comprising:
a control unit (101) having a user interface (104) for inputting data comprising user related information and
information about a location (109) the user related information relates to, wherein the control unit (101) is designed to generate a data set which comprises the data;
a communication unit (105) designed to transmit the data set to an external server (107);
a positioning unit (102), communicatively coupled to the control unit and designed to determine a position of the means of transport (100);
wherein the control unit (101) is designed to determine when the position of the means of transport (100) is within a predefined area (111) around the location (109) and to output the user related information as soon as it is determined that the position of the means of transport is within the area.

2. Navigation and communication system (200) of claim 1,
wherein the data set comprises a distance information which defines the area around the location.

3. Navigation and communication system (200) of one of the preceding claims,
wherein the data set comprises a list of recipients which are to receive the data set from the server.

4. Navigation and communication system (200) of one of the preceding claims,
wherein the control unit (101) is designed to receive instructions from a user, wherein the instructions define at least one of the content of the user related information, the location (109) the user related information relates to, a distance information (110) which defines the area (111) around the location, and the list of recipients.

5. Navigation and communication system (200) of one of claims 2 to 4,
wherein the control unit (101) is designed to change the distance information which defines the area around the location depending on a speed of the means of transport (100).

6. Navigation and communication system (200) of one of the preceding claims,
the control unit (101) is designed to output the user related information when it is determined that the position of the means of transport (100)is within the area (111) and when a predefined traffic situation is determined in the vicinity of the means of transport (100).

7. Navigation and communication system (200) of one of the preceding claims,
wherein the user related information comprises control information for controlling the means of transport (100).

8. Navigation and communication system (200) of one of the preceding claims, comprising the server (107), which is designed to link data sets generated by the same or different users in order to generate a bundle of data sets.

9. Means of transport (100) comprising a navigation and communication system (200) of one of claims 1 to 8.

10. Method for car-to-infrastructure communication and navigation, the method comprising the steps of:
inputting data into a user device (108), the data comprising user related information and information about a location (109) the user related information relates to;
generating a data set which comprises the data;
transmitting the data set from the user device (108) to an external server (107);
transmitting the data set from the external server (107) to a navigation and communication device (101, 102, 103, 104, 105, 106) of a car (100);
determining a position of the car (100);
determining, by the navigation and communication device (101, 102, 103, 104, 105, 106), when the position of the car (100) is within a predefined area (111) around the location (109) and to output the user related information as soon as it is determined that the position of the car (100) is within the area (111).

11. Program element, which, when being executed on one or several processors of a navigation and communication system (200), instructs the system to perform the following method steps:
generating a data set which comprises user related information and information about a location the user related information relates to, wherein the information has been input by a user into a user device;
transmitting the data set from the user device to an external server (107);
transmitting the data set from the external server () to he navigation and communication device (101, 102, 103, 104, 105, 106) of the car (100);
determining a position of the car (100);
determining, by the navigation and communication device (101, 102, 103, 104, 105, 106), when the position of the car (100) is within a predefined area (111) around the location (109) and to output the user related information as soon as it is determined that the position of the car (100) is within the area (111).

12. Computer-readable medium (106), on which a program element according to claim 10 is stored.
